# FASCICULE DE BREVET EUROPEEN

(11) **EP 0 717 585 B1**
(45) Date de publication et mention de la délivrance du brevet: **07.04.1999**
(21) Numéro de dépôt: 95402798.3
(22) Date de dépôt: 12.12.1995
(51) Int. Cl.: H05F 3/00, B64D 45/02

(54) **Elément en matériau composite avec assemblage(s) de continuité électrique à travers l'élément, son procédé de fabrication et son utilisation en aéronautique**
Verbundmaterial und Verbundelement mit dadurch sichergestellter elektrischer Kontinuität, dessen Herstellungsverfahren und dessen Verwendung in Flugzeugindustrie
Composite material and element with electrical continuity insured through it, its manufacturing process and use on aircraft

(30) Priorité: 16.12.1994 FR 9415194
(43) Date de publication de la demande: 19.06.1996
(73) Titulaire: EUROCOPTER, F-13725 Marignane Cédex (FR)
(72) Inventeur: Poggi, René Jérôme, F-13100 Aix en Provence (FR)
(74) Mandataire: Bérogin, Francis

(56) Documents cités:
- EP-A- 0 188 160
- FR-A- 2 687 195
- US-A- 3 906 308
- US-A- 4 576 776

## Description

L'invention a pour objet un élément en matériau composite comprenant au moins un assemblage destiné à assurer la conductivité électrique à travers l'élément, le matériau composite étant du type comprenant une matrice organique, nécessitant un traitement thermique pour atteindre une température critique de rigidification et/ou mise en forme, et renforcée de fibres minérales ou organiques, la température critique étant une température de polymérisation dans le cas d'une matrice thermodurcissable, et une température de mise en forme, par exemple par moulage, dans le cas d'une matrice thermoplastique.

L'invention vise également le procédé de fabrication de cet élément, ainsi que son utilisation en aéronautique.

La "métallisation" des éléments ou pièces en matériaux composites, c'est-à-dire les mesures prises pour assurer la continuité électrique au travers de ces éléments ou pièces, est une exigence requise dans le domaine aéronautique pour assurer notamment une protection des équipements électriques embarqués aux interférences électromagnétiques, lorsque les aéronefs embarquant ces équipements sont au moins partiellement réalisés à l'aide de tels éléments. Elle a pour but, entre autres, de permettre l'écoulement des charges électrostatiques qui peuvent provenir par exemple de contraintes électriques.

Pratiquement, on interpose un grillage électriquement conducteur dans un empilage de couches de matériaux composites destinées à former par exemple un panneau de fuselage, ce qui revient à conférer au fuselage d'un aéronef ainsi réalisé les propriétés d'une cage de Faraday. De cette manière, l'intérieur du fuselage se trouve isolé électriquement, le grillage permettant l'évacuation des charges électriques.

Cependant, une telle structure s'avère insuffisante pour permettre le passage de courants de forte intensité dûs à la foudre, par exemple. Dans ce cas, la décharge électrique ne peut pas être totalement évacuée par le simple grillage et elle risque d'altérer l'élément composite considéré, et de mettre l'aéronef en danger.

En général, le remède consiste à disposer en plus, dans l'empilage de couches de matériaux composites, des clinquants en cuivre, généralement sous forme de rubans de faible largeur.

L'expérience montre que ces clinquants, introduits au sein des matériaux composites, se déforment lors du traitement thermique que subissent les matrices organiques de ces matériaux (lors de la polymérisation à chaud dans le cas de matrices thermodurcissables ou lors du moulage et/ou de la conformation à chaud dans le cas de matrices thermoplastiques). Il apparaît, lors de cette opération, des contraintes thermiques. Il peut en résulter notamment des décollements ou des ruptures qui altèrent les caractéristiques des éléments en question.

Il peut en résulter, également, des ondulations des bandes de cuivre. Ces ondulations ont pour effet de supprimer le contact électrique entre deux bandes de cuivre successives. De ce fait, une telle disposition ne peut pas permettre d'assurer de manière fiable la métallisation des éléments en matériaux composites.

La solution actuelle impose de limiter ces rubans de cuivre à une longueur de 0,8 à 1 m environ et d'assurer la continuité électrique par chevauchement local sur quelques centimètres des bandes de cuivre, prises deux à deux. En général, ce procédé supprime les ondulations des rubans de cuivre lors des traitements thermiques.

Cependant, lors de la polymérisation ou du traitement thermique de conformation, les résines peuvent s'engager entre les bandes de cuivre dans les zones de chevauchement, et altérer ainsi les contacts. De ce fait, la conduction électrique n'est plus convenablement assurée. Il convient donc d'intervenir souvent sur ce genre d'assemblage pour effectuer des réparations par soudure. On peut également prévoir la mise en place de vis ou de rivets, pour maintenir les bandes de cuivre en contact dans les zones de chevauchement, mais les résultats ne sont jamais excellents (oxydations, résistance électrique accrue, ...). De plus, ces opérations nécessitent du temps et de la main d'oeuvre et sont de ce fait coûteuses.

EP-A-0 188 160 décrit un élément en fibres de carbone sous forme d'un ruban préimpregné d'une résine polymérisable. Une des extrémités du ruban est coiffée d'un tricotage d'un fil métallique qui s'imprime dans la résine. Après polymérisation, un contact intime de fils métalliques et de fibres de carbone est assuré.

L'invention a pour but de fournir un élément en matériau composite comprenant au moins un assemblage exempt de tous les inconvénients des éléments de l'art antérieur, en particulier, chaque assemblage doit permettre le passage de courants électriques de forte intensité, et ne pas se déformer ou s'altérer sous l'action de contraintes thermiques, surtout lors de l'opération de polymérisation ou de moulage et/ou conformation à chaud de la matrice.

Selon la Demanderesse et de façon surprenante et inattendue, il est possible non seulement d'obtenir un élément en matériau composite comprenant au moins un assemblage permettant d'assurer une meilleure continuité électrique à travers l'élément que les assemblages de l'art antérieur mais, de plus, d'atteindre ce résultat d'une manière simple, économique et efficace, dès lors que l'on met en oeuvre au moins un assemblage avec superposition partielle d'au moins deux organes allongés électriquement conducteurs et que l'on interpose une pièce de jonction au moins revêtue d'un métal ou alliage électriquement bon conducteur entre deux portions superposées desdits organes allongés de chaque assemblage, en maintenant la pièce en contact permanent avec lesdites portions superposées.

Plus précisément, l'élément en matériau composite conforme à l'invention, comprenant une matrice organique à température critique de rigidification et/ou mise en forme, et renforcée de fibres minérales ou organiques, notamment choisies dans le groupe comprenant les fibres de carbone, de verre et aramides, ainsi qu'au moins un assemblage avec superposition partielle d'au moins deux organes allongés d'un premier métal ou alliage électriquement conducteur, à point de fusion sensiblement supérieur à ladite température critique de la matrice, l'assemblage étant essentiellement noyé dans la matrice afin d'assurer une continuité électrique à travers l'élément, est caractérisé par le fait qu'au moins une pièce de jonction, constituée au moins partiellement en surface d'un second métal ou alliage électriquement conducteur, à point de fusion sensiblement inférieur au point de fusion dudit premier métal ou alliage, est interposée entre des portions superposées desdits organes allongés de chaque assemblage, avec lesquelles portions ladite pièce de jonction est maintenue en contact permanent par soudure dudit second métal ou alliage contre ledit premier métal ou alliage.

Selon un mode de réalisation préférentiel, les organes allongés du premier métal ou alliage sont des lames, rubans ou bandes, comme connu en soi.

En effet, de tels organes allongés permettent une bonne évacuation des charges électriques en même temps qu'une bonne intégration aux matériaux composites.

Selon un mode de réalisation avantageux, la pièce de jonction comprend une structure porteuse, de préférence en forme de pièce sensiblement plane, en un troisième métal ou alliage électriquement conducteur, à point de fusion sensiblement supérieur à la température critique de la matrice, et comportant un revêtement au moins partiel en ledit second métal ou alliage, dont le point de fusion est sensiblement inférieur au point de fusion dudit troisième métal ou alliage. Ceci est favorable à la fois à l'intégration de la pièce de jonction dans les composites et à l'obtention d'une bonne liaison par soudure du revêtement en ledit second métal ou alliage de la pièce de jonction audit premier métal ou alliage des organes allongés.

En outre, de cette manière, l'évacuation des charges électriques est encore mieux assurée, et de façon rapide et efficace. On préfère mettre en oeuvre une pièce de jonction, dont la pièce plane du troisième métal ou alliage se présente sous la forme d'une grille, d'un grillage ou d'un treillis au moins partiellement revêtu du second métal ou alliage, ayant de préférence une épaisseur comprise entre 0,05 mm et 2 mm. On obtient ainsi des pièces de jonction planes et particulièrement aptes à assurer une bonne conductivité électrique et une bonne évacuation des charges, en particulier si le troisième métal ou alliage est choisi dans le groupe comprenant les alliages de cuivre, d'aluminium et de nickel, tandis que le premier métal ou alliage est choisi dans le groupe comprenant le cuivre, l'aluminium, l'acier inoxydable et le nickel, et que le second métal ou alliage est choisi dans le groupe comprenant l'indium, le nickel, l'étain, le plomb, le zinc et des alliages eutectiques, notamment des métaux précités. De plus, une telle pièce de jonction est simple à disposer dans l'empilage des couches composites de l'élément à réaliser.

Il est particulièrement avantageux de réaliser un élément présentant des clinquants de cuivre en tant qu'organes allongés et un grillage en bronze imprégné d'indium en tant que pièce de jonction entre deux portions superposées des clinquants de cuivre. En effet, ces métaux sont particulièrement bons conducteurs, peu coûteux et l'indium, qui a un bas point de fusion (156,2°C), est simple à déposer en revêtement sur du bronze par exemple, et à utiliser pour effectuer une soudure à bas point de fusion.

Dans un mode de réalisation procurant une meilleure qualité de la soudure reliant la pièce de jonction aux organes allongés, et économe en temps de fabrication, car évitant le dépôt d'un revêtement en ledit second métal ou alliage sur une structure porteuse, telle qu'un grillage, en ledit troisième métal ou alliage, ladite pièce de jonction est uniquement constituée dudit second métal ou alliage. Avantageusement, ladite pièce de jonction est une galette plate et mince de ce second métal ou alliage, de sorte à présenter des surfaces homogènes pour la liaison aux organes allongés, et cette galette est disposée dans une fenêtre ménagée dans une couche de fibres de renfort également interposée entre les portions superposées des organes allongés auxquelles la galette est soudée.

Chaque assemblage d'au moins deux organes allongés et d'au moins une pièce de jonction peut être réalisé dans un premier temps, puis introduit dans un second temps dans un empilage de couches composites avant le traitement thermique de rigidification et/ou mise en forme de l'empilage. Mais il est particulièrement avantageux, pour réduire considérablement la durée et la complexité de fabrication, et donc aussi les coûts, que le point de fusion du second métal ou alliage soit sensiblement inférieur à la température critique de la matrice. Ceci permet d'introduire les organes allongés et les pièces de jonction non soudés les uns aux autres dans l'empilage des couches composites de l'élément avant le traitement thermique de rigidification et/ou conformation de l'empilage, et d'assurer la soudure du second métal ou alliage des pièces de jonction au premier métal ou alliage des organes allongés au cours du traitement thermique permettant d'atteindre la température critique de la matrice, nécessaire à sa rigidification et/ou à sa mise en forme, pour l'obtention d'un élément composite achevé et utilisable.

L'élément en matériau composite selon l'invention peut être utilisé notamment dans le domaine de l'aéronautique et surtout pour la fabrication de pales ou de moyeux de rotors d'hélicoptères ou pour la fabrication de panneaux de fuselage ou de capotage, de trappes ou de portes d'avions et d'hélicoptères.

Le procédé de fabrication d'un élément selon l'invention est caractérisé par le fait que :
- dans une première étape, on réalise au moins une pièce de jonction en la constituant au moins partiellement en surface avec le second métal ou alliage électriquement conducteur, notamment choisi dans le groupe comprenant l'indium, le nickel, l'étain, le plomb, le zinc et des alliages eutectiques, notamment des métaux précités,
- dans une deuxième étape, on prépare au moins un assemblage en interposant au moins une pièce de jonction obtenue selon la première étape entre des portions superposées d'au moins deux organes allongés, réalisés dans le premier métal ou alliage électriquement conducteur, notamment choisi dans le groupe comprenant le cuivre, l'aluminium, l'acier inoxydable et le nickel, et
- dans une troisième étape, on réalise l'élément en introduisant au moins un assemblage préparé selon la deuxième étape dans un matériau composite et en effectuant un traitement thermique atteignant la température critique de la matrice de ce matériau. Ce traitement thermique est celui requis par la matrice, c'est-à-dire un traitement thermique de polymérisation ou de conformation selon que la ou les résines de la matrice est ou sont thermodurcissable(s) ou thermoplastique(s), et éventuellement et simultanément un traitement thermique d'assemblage de la ou des pièces de jonction aux organes allongés conducteurs par soudage du second au premier métal ou alliage, si le second métal ou alliage a un point de fusion sensiblement inférieur à ladite température critique de la matrice.

Selon une première variante du procédé de l'invention, dans la première étape, on réalise la pièce de jonction en déposant, par exemple à la vague, au moyen d'un fer à souder, un revêtement du second métal ou alliage sur une structure porteuse conformée en pièce sensiblement plane réalisée dans ledit troisième métal ou alliage électriquement conducteur et choisi notamment dans le groupe comprenant les alliages de cuivre, d'aluminium et de nickel.

Selon une seconde variante du procédé, dans la première étape, la pièce de jonction est réalisée en écrasant et/ou laminant au moins un morceau dudit second métal ou alliage en une galette sensiblement plate et mince, et, dans la seconde étape, avant superposition l'une par l'autre desdites portions superposées des deux organes allongés, on dispose la galette dans une fenêtre ménagée dans une couche de fibres de renfort disposée sur l'une desdites portions superposées.

Selon un mode de réalisation encore plus préférentiel, dans la deuxième étape du procédé, on maintient au moins une pièce de jonction entre des portions superposées des organes allongés au moyen d'une substance adhésive ou collante, qui, dans la seconde variante du procédé, peut être une résine d'imprégnation d'une bandelette d'une couche de fibres de renfort recouvrant la fenêtre recevant la galette, et de la même classe que la ou les résines de la matrice du matériau composite.

De cette façon, la fabrication de l'élément en matériau composite est plus facile, car un bon positionnement de la pièce de jonction entre les portions superposées des organes allongés est assuré.

Selon un mode de réalisation encore plus avantageux, en particulier pour la formation du matériau composite, dans la troisième étape du procédé, le traitement thermique est effectué sous une dépression comprise entre environ 0,05 MPa et environ 0,01 MPa dans un sac à vide en autoclave, d'abord à une température comprise entre environ 60°C et environ 120°C et pendant une durée comprise entre environ 0,5 h et environ 1,5 h, puis à une température comprise entre environ 140°C et environ 220°C et pendant une durée comprise entre environ 1 h et environ 3 h et sous une pression comprise entre environ 0,15 MPa et 0,55 MPa.

Ce traitement thermique est particulièrement, économique et efficace. Il s'avère également que le matériel utilisé pour sa mise en oeuvre est un matériel courant, qui ne demande donc pas d'installations particulières.

Il est également à noter que les conditions, notamment de pression et températures, requises sont des conditions relativement faciles à obtenir.

L'invention pourra être encore mieux comprise à l'aide des exemples non limitatifs qui suivent et dans lesquels sont indiqués deux modes de réalisation avantageux de l'invention. Ces exemples sont décrits en référence aux dessins annexés sur lesquels :
- la figure 1 est une vue schématique en perspective représentant la préparation d'un premier exemple de pièce de jonction,
- la figure 2 est une vue analogue à la figure 1 représentant la préparation d'un assemblage à l'aide de la pièce de jonction de la figure 1,
- la figure 3 est une vue schématique en coupe transversale d'un élément stratifié en matériau composite incorporant un assemblage selon la figure 2,
- la figure 4 présente en a) et b) des courbes de température et de pression en fonction du temps correspondant au traitement thermique de formation de l'élément en matériau composite de la figure 3,
- la figure 5 est une courbe de mesure de la résistance électrique en fonction de la distance dans l'élément de la figure 3,
- les figures 6a à 6c sont trois vues en plan représentant trois phases successives de la préparation d'un assemblage à l'aide d'un second exemple de pièce de jonction,
- la figure 7 est une vue schématique en coupe longitudinale de l'assemblage de la figure 6c.

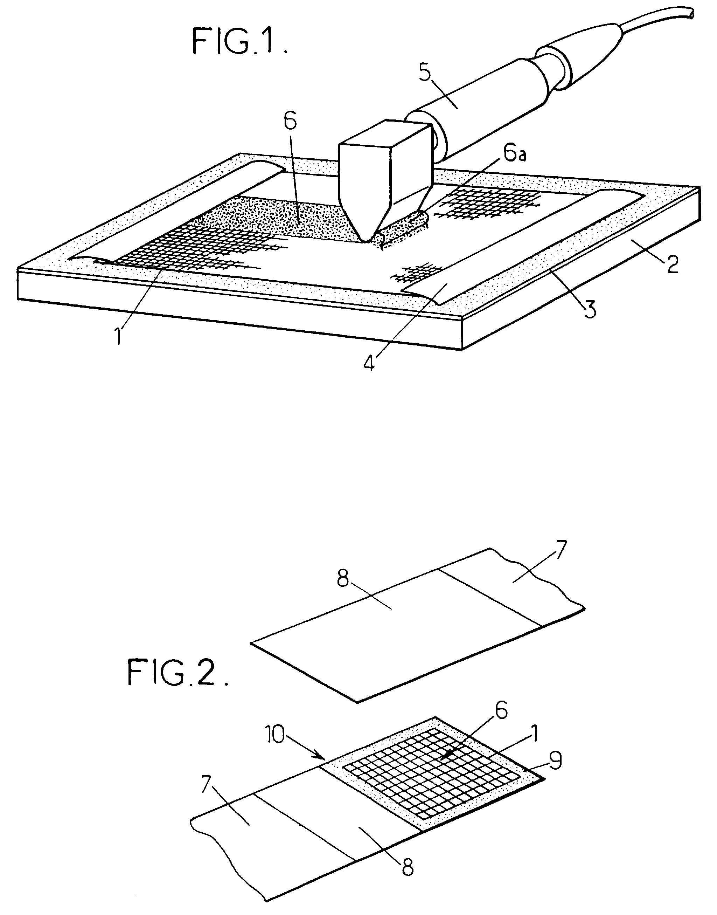

L'exemple décrit en référence aux figures 1 à 3 concerne la fabrication d'un élément stratifié en matériau composite comprenant des clinquants ou rubans de cuivre assemblés par un grillage de bronze recouvert d'indium, pour assurer la continuité électrique dans l'élément.

On se propose de fabriquer un élément en matériau composite conforme à l'invention comprenant une matrice organique synthétique en résine thermodurcissable, de la classe dite "à 180°C", c'est-à-dire dont la température de polymérisation est de 180°C, telle qu'une résine époxyde, renforcée par des fibres de verre et des fibres de carbone en couches superposées, ainsi qu'un assemblage avec superposition partielle de deux clinquants ou rubans de cuivre d'environ 40 mm de large, entre lesquels est interposé un grillage de bronze partiellement revêtu d'indium.

Dans une première étape, on réalise l'imprégnation ou le revêtement d'un grillage de bronze à l'aide d'indium. Pour cela, on décape un grillage de bronze 1 sensiblement carré d'environ 30 mm de côté avec un produit décapant le cuivre ou les alliages de cuivre avant soudage, tel que celui commercialisé sous la dénomination HARAFLUX, on le rince abondamment à l'eau chaude et on le sèche à l'air à 60°C.

On place le grillage 1 ainsi préparé sur un support plan en bois 2 comme montré sur la figure 1. Le grillage 1 est maintenu sur le support 2 à l'aide d'un adhésif simple-face 3, par exemple en PTFE, collé sur le support 2 et sur lequel le grillage 1 est maintenu à l'aide d'un adhésif simple-face 4 collé le long de deux côtés opposés du grillage 1 et sur les parties du support 2 qui sont adjacentes à ces deux côtés opposés.

On obtient le grillage 1 revêtu d'indium 6 par un dépôt à la vague en passant un fer à souder électrique à panne large 5 sur le grillage 1 en repoussant devant lui une vague d'indium 6a sur le grillage 1. Le point de fusion de l'indium, bon conducteur électrique, étant inférieur à celui du bronze, on obtient une imprégnation ou un revêtement du grillage de bronze 1 avec une couche mince d'indium 6, dont l'épaisseur peut être comprise entre 0,05 mm et 2 mm.

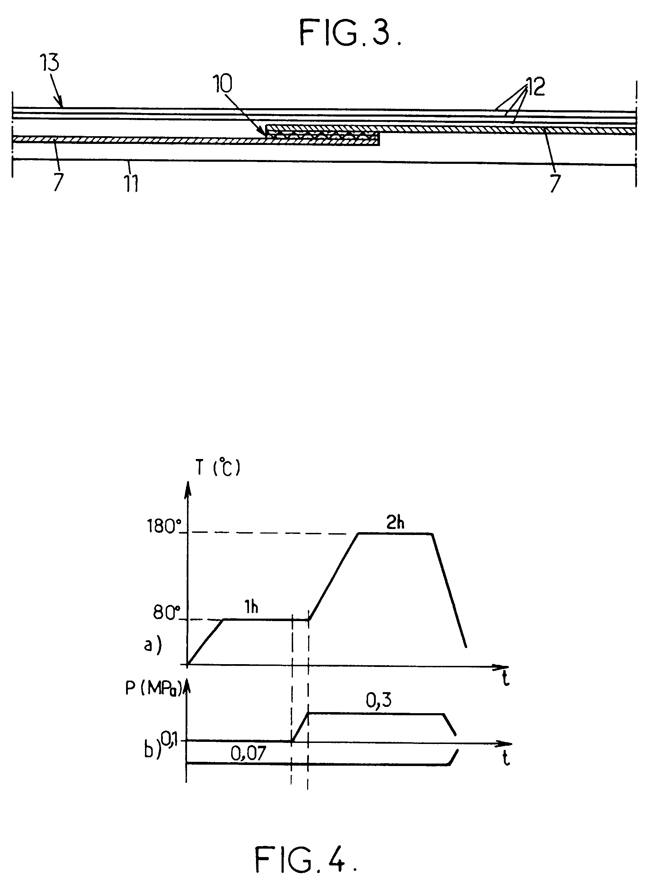

Dans une deuxième étape, on réalise un assemblage 10 en interposant le grillage 1 imprégné d'indium 6 entre deux rubans ou clinquants de cuivre 7, comme représenté sur la figure 2.

Pour cela, on découpe deux rubans ou clinquants de cuivre 7 de 40 mm de largeur à la longueur voulue, et on les redresse pour enlever les ondulations éventuelles.

On brosse une portion 8 sur l'une des faces de chaque clinquant de cuivre 7 dans sa partie d'extrémité venant en superposition avec la partie d'extrémité de l'autre. Sur la portion brossée 8 de l'un des deux clinquants de cuivre 7, on colle un film d'adhésif double-face 9, par exemple en silicone, ayant une fenêtre carrée dans sa partie centrale, puis on colle sur une partie de cet adhésif 9 autour de sa fenêtre, les quatre côtés du grillage 1 imprégné d'indium 6, puis la portion brossée 8 de l'autre clinquant de cuivre 7 sur la partie de l'adhésif 9 non recouverte par le grillage 1, comme indiqué sur la figure 2.

Les deux extrémités 8 superposées des clinquants 7 sont assemblées par l'adhésif 9 avec interposition du grillage 1 revêtu d'indium 6. L'assemblage 10 peut être soumis à un traitement thermique, sous une dépression de 0,03 MPa à partir de la pression atmosphérique (pression absolue de 0,07 MPa) dans un sac à vide, en autoclave d'abord à 80°C pendant 1 heure puis à 180°C pendant 2 heures sous une pression de 0,2 MPa, comme représenté sur les courbes a) et b) de la figure 4. Mais, de préférence, le traitement thermique est effectué après mise en place de l'assemblage 10 dans un empilement de couches 11 et 12 de fibres de renfort préimprégnées de la résine synthétique précitée, polymérisable à 180°C, pour former un élément 13 en matériau composite par polymérisation à chaud de la résine et compactage sous pression de l'empilement, comme décrit ci-dessous dans la troisième étape, en référence à la figure 3.

Dans cette troisième étape, on introduit l'assemblage 10 ainsi obtenu entre, d'une part, trois couches supérieures 12 de fibres de carbone et, d'autre part, une couche inférieure 11 de fibres de verre qui sont préimprégnées de résine époxyde, les fibres étant agencées en tissus, tresses, nappes ou stratifils, unidirectionnels ou croisés, selon la structure recherchée pour l'élément 13 en matériau composite que l'on veut obtenir (voir figure 3). On soumet l'élément 13 ainsi obtenu à un traitement thermique effectué en sac à vide sous une dépression de 0,03 MPa (pression absolue de 0,07 MPa) et en autoclave, d'abord à une température de 80°C pendant 1 heure, puis à une température de 180°C pendant 2 heures, sous une pression de 0,2 MPa depuis la fin du palier de température à 80°C.

Le traitement thermique est schématisé sur les courbes a) et b) de la figure 4. Sur la figure 4, a), l'axe des ordonnées représente la température T (en °C) et l'axe des abscisses, le temps du traitement t (en heure). Sur la figure 4, b), l'axe des ordonnées représente la pression P (en MPa) et l'axe des abscisses le temps du traitement (en heure).

Selon la figure 4, b), la dépression de 0,03 MPa dans le sac à vide contenant l'élément stratifié 13 est maintenue en continu pendant toute la durée du traitement thermique. Au début du cycle de polymérisation, selon la figure 4, a), la montée en température, à partir de la température ambiante, est sensiblement linéaire jusqu'à la température de 80°C, maintenue ensuite en palier pendant 1 heure. Peu avant la fin de ce palier à 80°C, la pression est augmentée sensiblement linéairement dans l'autoclave, autour du sac à vide, depuis la pression atmosphérique jusqu'à atteindre une surpression de 0,2 MPa, qui est ensuite maintenue en palier (voir figure 4, b)). Au début de ce palier de surpression, selon la figure 4, a), la température est augmentée linéairement de 80°C à 180°C pour polymériser la résine, et est ensuite maintenue en palier à cette température pendant environ 2 heures. Puis cette température décroît sensiblement linéairement de 180°C à la température ambiante, et la surpression est réduite de 0,2 MPa à la pression atmosphérique au cours de cette phase de refroidissement. Comme le point de fusion de l'indium (156,2°C) est inférieur à la température de polymérisation de 180°C, le revêtement d'indium 6 du grillage de bronze 1 fond en contact du cuivre des rubans 7 dans l'assemblage 10, puis, au refroidissement, se solidifie en assurant une soudure solidarisant les deux rubans 7 au grillage 1. Enfin la dépression dans le sac à vide est annulée, et l'autoclave, puis le sac à vide peuvent être ouverts, pour sortir l'élément composite stratifié ainsi fabriqué. A noter que les points de fusion du cuivre et du bronze étant très supérieurs à la température de polymérisation de la résine, le traitement thermique n'endommage pas les rubans 7 ni le grillage 1.

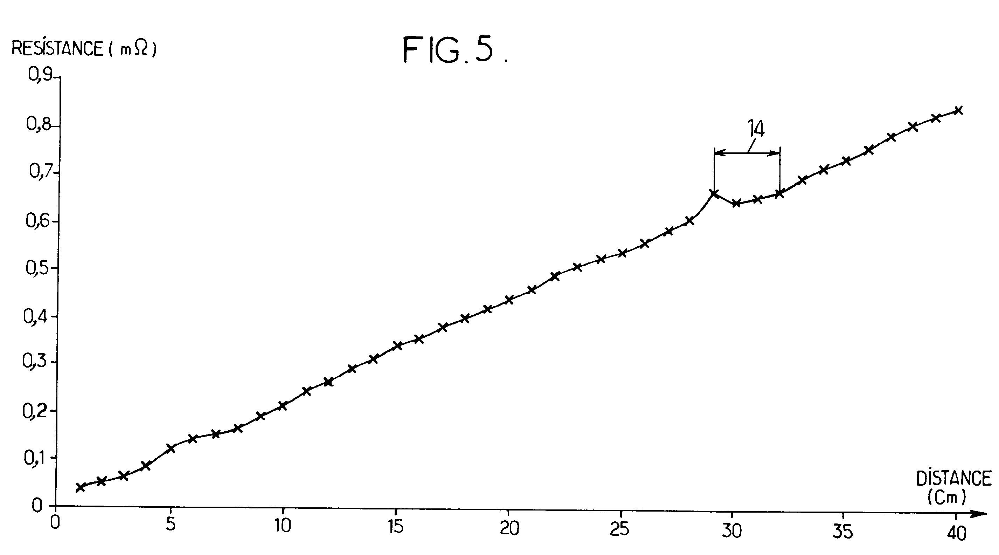

La bonne conductivité électrique à travers l'élément 13 est illustrée par le graphe de la figure 5.

Le graphe représente l'évolution de la résistance électrique en fonction de la distance entre un point de référence et un point de mesure déplacé le long des rubans de cuivre 7 sur l'élément 13. On observe une quasi linéarité de la résistance électrique mesurée y compris au niveau de la zone de jonction 14, où se trouve la pièce de jonction formée par le grillage 1 revêtu d'indium 6.

Il en résulte que l'assemblage 10 tel que conçu dans le cadre de la présente invention permet d'assurer une bonne continuité électrique à l'intérieur d'un élément 13 en matériau composite, y compris au niveau de la pièce de jonction (1, 6), grâce à la coopération de cette dernière (en deux matériaux bons conducteurs de l'électricité (bronze et indium)) avec les bandes ou rubans en cuivre, bons conducteurs de l'électricité.

En variante, la pièce de jonction peut être un grillage de bronze revêtu d'un tricot de nickel, également bon conducteur de l'électricité.

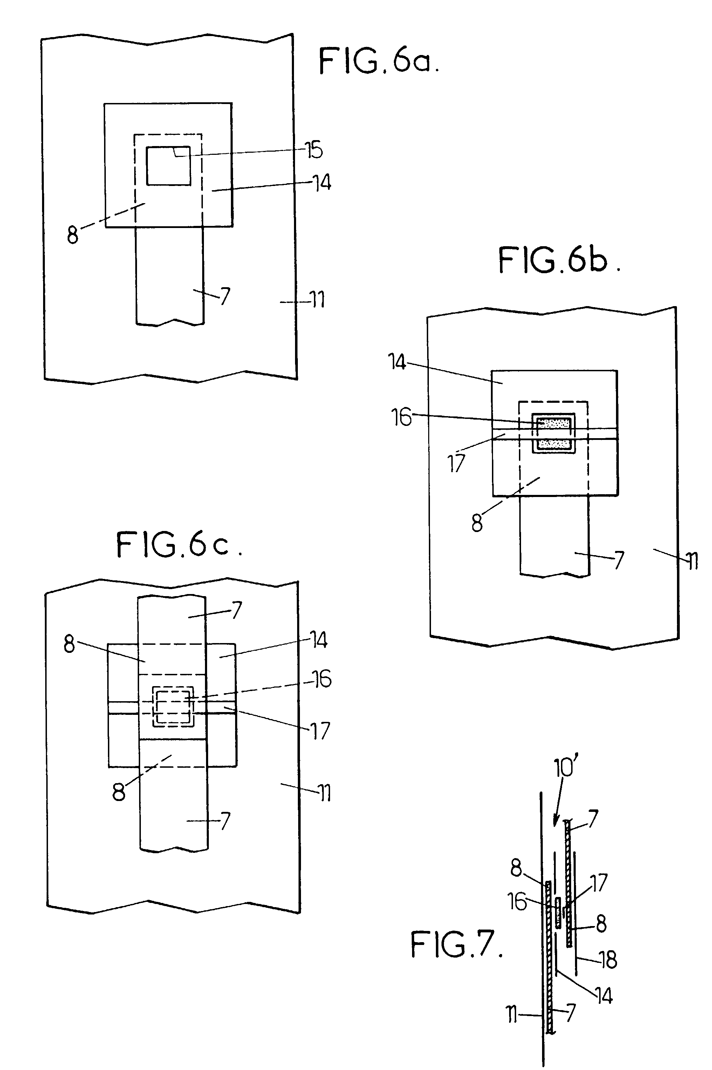

La réalisation d'un second exemple d'assemblage de rubans de cuivre à l'aide d'une pièce de jonction pour assurer la continuité électrique dans un élément en matériau composite à matrice organique est décrite ci-dessous en référence aux figures 6a à 7. On suppose, dans ce qui suit, que la fabrication d'un élément composite tel que 13 de la figure 3 est assurée dans un moule de structure classique, en deux parties à empreintes internes complémentaires. Dans l'empreinte interne de la partie inférieure du moule (non représentée), on commence par déposer, comme schématisée sur la figure 6a, la couche 11 de la figure 3, par exemple une couche de tissu de fibres de verre, destinée à former la peau externe de l'élément 13, de 0,05 mm d'épaisseur et préimprégnée de la résine époxyde polymérisant à 180°C. Sur cette couche 11, on dépose une première bande de cuivre 7, après l'avoir, comme dans l'exemple précédent, redressée pour enlever les ondulations, décapée dans sa partie d'extrémité 8 par brossage mécanique, par exemple à l'aide d'une éponge métallique, puis dégraissée, la manipulation des bandes de cuivre 7 se faisant avec des gants pour éviter toute oxydation du cuivre. On découpe ensuite un morceau carré ou rectangulaire 14 dans une couche de fibres de renfort, qui peut être le même tissu de fibres de verre imprégné de résine que la couche 11, et on le pose sur l'extrémité 8 de la bande de cuivre 7 et sur les parties adjacentes du tissu de verre 11, après avoir découpé une fenêtre 15 de forme carrée dans ce morceau 14, qui est collé de place en place sur la couche de tissu 11, autour de l'extrémité 8 de la bande 7 que ce morceau 14 recouvre. Ce collage peut être assuré par la résine d'imprégnation du morceau 14 de tissu de verre. Par rapport à la largeur de la bande de cuivre 7, de l'ordre de 30 à 40 mm, les dimensions du morceau 14 de tissu de verre sont telles que les parties de ce morceau 14 qui sont appliquées contre le tissu de verre 11 ont une largeur de 10 à 15 mm, sur les trois côtés autour de l'extrémité 8 de la bande 7, et que la fenêtre 15 soit entourée, sur ces trois côtés, d'une partie du morceau de tissu de verre 14 recouvrant la bande de cuivre 7 sur 5 à 7 mm de large environ.

Comme montré sur la figure 6b, on dépose ensuite sur l'extrémité 8 de la bande de cuivre 7, et dans la fenêtre 15 du morceau de tissu de verre 14, une galette 16 de forme carrée d'indium. Cette galette 16 est plus petite que la fenêtre 15 découpée dans le morceau de tissu de verre 14 de sorte à présenter un jeu de 5 à 7 mm environ entre les côtés de la galette 16 et ceux de la fenêtre 15.

La galette d'indium 16 a été préparée en écrasant à la presse un morceau d'indium pur, ou en le laminant entre des rouleaux, pour transformer ce morceau d'indium en galette, après l'avoir protégé en le disposant entre deux films d'une matière synthétique du type utilisé pour constituer des sacs à vide, afin d'éviter l'adhérence de l'indium aux mâchoires de la presse ou aux rouleaux de laminage. La galette d'indium ainsi formée a une épaisseur comprise entre environ 0,15 mm et 0,25 mm. Dans la galette plate et mince ainsi obtenue, on découpe la galette 16 de forme carrée aux dimensions un peu inférieures à celles de la fenêtre 15 qui la reçoit, comme expliqué ci-dessus.

Eventuellement, pour maintenir la galette 16 en place dans cette fenêtre 15, on dépose une bandelette 17 de tissu de verre préimprégné de résine, donc collante, d'une largeur de 5 à 7 mm par exemple, par dessus la galette 16 et le morceau de tissu de verre 14, transversalement à la bande de cuivre 7, comme représenté sur la figure 6b.

On dépose ensuite la seconde bande de cuivre 7, comme montré sur la figure 6c, dans le prolongement de la première bande 7, mais de sorte que son extrémité 8, à surface préparée par décapage et dégraissage, soit placée au-dessus de l'empilement de la bandelette de tissu 17, de la galette d'indium 16, du morceau de tissu de verre 14 et de l'extrémité 8 en regard de la première bande de cuivre 7. Les deux bandes de cuivre 7 sont ainsi superposées par leurs extrémités 8, comme dans le premier exemple (voir figure 2), puis l'ensemble est recouvert d'un second morceau 18 rectangulaire ou carré du même tissu de verre imprégné de résine, pour stabiliser l'assemblage 10' ainsi préparé et en particulier faire tenir les bandes de cuivre 7 en superposition par leurs extrémités 8. L'assemblage ainsi préparé est représenté en coupe sur la figure 7. Il est compacté en étant disposé dans un sac à vide relié pendant une heure au minimum à une source de dépression, pour faire tenir l'ensemble des composants ainsi positionnés. Après l'opération de compactage, on poursuit l'opération de drapage, selon la structure que l'on veut obtenir, par exemple en empilant, par dessus les bandes de cuivre 7 et l'assemblage 10' de la figure 7, trois couches de tissu de fibres de carbone 12, comme représenté sur la figure 3, si l'on veut réaliser un élément en matériau composite ayant la même structure résistante que celui de la figure 3.

L'empilage ainsi obtenu est ensuite soumis au traitement thermique assurant la polymérisation de la résine à 180°C. Ce traitement thermique peut être celui décrit ci-dessus en référence à la figure 4. Au cours de ce traitement thermique, l'indium de la galette 16 fond à la température de 156,2°C et remplit la fenêtre 15, avant la polymérisation à 180°C.

Après le refroidissement, et comme dans le premier exemple, la galette d'indium 16, constituant une pièce de jonction entre les deux bandes de cuivre 7, est soudée au cuivre des bandes 7 par des surfaces homogènes, procurant une bonne qualité à la soudure.

Comme mentionné ci-dessus, à la place de l'indium, on peut utiliser par exemple le nickel, l'étain, le plomb, le zinc ou des alliages eutectiques de ces métaux, tandis que les bandes de cuivre peuvent être remplacées par des bandes ou rubans par exemple d'aluminium, d'acier inoxydable ou encore de nickel.

Lorsque la pièce de jonction n'est pas entièrement réalisée dans le métal ou l'alliage à bas point de fusion utilisé pour faire la soudure avec les bandes ou rubans conducteurs, on peut utiliser, pour réaliser la structure plane porteuse du revêtement à bas point de fusion, et à la place du bronze, des alliages d'aluminium et/ou de nickel ainsi que d'autres alliages du cuivre par exemple.

L'invention peut être appliquée à la fabrication de tous éléments en matériau composite devant présenter une continuité électrique, et en particulier ceux utilisables en construction aéronautique pour réaliser des panneaux de fuselage, de voilure ou de capotage, des portes et trappes de fuselage ou voilure, des éléments de surfaces de commande ou de caissons pour avions et hélicoptères, ainsi que des moyeux ou pales de rotors d'hélicoptères par exemple, sans que cette énumération soit limitative.

## Revendications

1. Elément en matériau composite (13) comprenant une matrice organique à température critique de rigidification et/ou mise en forme, et renforcée de fibres minérales ou organiques (11, 12), notamment choisies dans le groupe comprenant les fibres de carbone, de verre et aramides, ainsi qu'au moins un assemblage (10, 10') avec superposition partielle d'au moins deux organes allongés (7) d'un premier métal ou alliage électriquement conducteur, à point de fusion sensiblement supérieur à ladite température critique de la matrice, l'assemblage (10, 10') étant essentiellement noyé dans la matrice afin d'assurer une continuité électrique à travers l'élément, caractérisé par le fait qu'au moins une pièce de jonction (1, 16), constituée au moins partiellement en surface d'un second métal ou alliage électriquement conducteur, à point de fusion sensiblement inférieur au point de fusion dudit premier métal ou alliage, est interposée entre des portions superposées desdits organes allongés (7) de chaque assemblage (10, 10'), avec lesquelles portions ladite pièce de jonction (1, 16) est maintenue en contact permanent par soudure dudit second métal ou alliage contre ledit premier métal ou alliage.

2. Elément selon la revendication 1, caractérisé en ce que le point de fusion du second métal ou alliage est sensiblement inférieur à la température critique de la matrice.

3. Elément selon l'une des revendications 1 et 2, caractérisé en ce que le premier métal ou alliage est choisi dans le groupe comprenant le cuivre, l'aluminium, l'acier inoxydable et le nickel.

4. Elément selon l'une des revendications 1 à 3, caractérisé en ce que le second métal ou alliage est choisi dans le groupe comprenant l'indium, le nickel, l'étain, le plomb, le zinc et des alliages eutectiques.

5. Elément selon l'une quelconque des revendications 1 à 4, caractérisé en ce que la pièce de jonction (1) comprend une pièce sensiblement plane, en un troisième métal ou alliage électriquement conducteur à point de fusion sensiblement supérieur à ladite température critique de la matrice, et comportant un revêtement (6) au moins partiel en ledit second métal ou alliage, dont le point de fusion est sensiblement inférieur au point de fusion dudit troisième métal ou alliage.

6. Elément selon la revendication 5, caractérisé par le fait que la pièce sensiblement plane du troisième métal ou alliage est une grille, un grillage (1) ou un treillis, au moins partiellement revêtu du second métal ou alliage (6).

7. Elément selon la revendication 6, caractérisé par le fait que le revêtement (6) en second métal ou alliage a une épaisseur comprise entre 0,05 mm et 2 mm.

8. Elément selon l'une quelconque des revendications 5 à 7, caractérisé en ce que ledit troisième métal ou alliage est choisi dans le groupe comprenant les alliages de cuivre, d'aluminium et de nickel.

9. Elément selon la revendication 8, caractérisé par le fait que les organes allongés (7) sont des clinquants de cuivre et la pièce de jonction (1) est un grillage en bronze imprégné d'indium (6).

10. Elément selon l'une quelconque des revendications 1 à 4, caractérisé en ce que la pièce de jonction (16) est uniquement constituée dudit second métal ou alliage.

11. Elément selon la revendication 10, caractérisé en ce que ladite pièce de jonction est une galette (16) sensiblement plate et mince dudit second métal ou alliage, la galette (16) étant disposée dans une fenêtre (15) ménagée dans une couche (14) de fibres de renfort également interposée entre lesdites portions superposées (8) des organes allongés (7) auxquelles la galette (16) est soudée.

12. Elément selon l'une quelconque des revendications 1 à 11, caractérisé par le fait que les organes allongés (7) du premier métal ou alliage sont des lames, rubans ou bandes.

13. Utilisation de l'élément en matériau composite (13) selon l'une quelconque des revendications 1 à 12 précédentes, dans le domaine de l'aéronautique, et notamment pour la fabrication de pales ou de moyeux de rotors d'hélicoptères ou pour la fabrication de panneaux de fuselage ou de capotage, de trappes ou de portes d'avions et d'hélicoptères.

14. Procédé de fabrication d'un élément selon l'une quelconque des revendications 1 à 12, caractérisé par le fait que :
- dans une première étape, on réalise au moins une pièce de jonction (1, 16) en la constituant au moins partiellement en surface avec ledit second métal ou alliage électriquement conducteur,
- dans une deuxième étape, on prépare au moins un assemblage (10, 10') en interposant au moins une pièce de jonction (1, 16) obtenue selon la première étape entre des portions superposées (8) d'au moins deux organes allongés (7), réalisés dans le premier métal ou alliage électriquement conducteur, et
- dans une troisième étape, on réalise l'élément (13) en introduisant au moins un assemblage (10, 10') préparé selon la deuxième étape dans un matériau composite et en effectuant un traitement thermique atteignant la température critique de la matrice dudit matériau.

15. Procédé selon la revendication 14, caractérisé en ce que, dans la première étape, on réalise la pièce de jonction en déposant un revêtement (6) dudit second métal ou alliage sur une pièce sensiblement plane (1) réalisée dans le troisième métal ou alliage électriquement conducteur.

16. Procédé selon la revendication 15, caractérisé par le fait que, dans la première étape, on effectue le dépôt du revêtement (6) à la vague (6a), au moyen d'un fer à souder (5) par exemple.

17. Procédé selon la revendication 14, caractérisé en ce que, dans la première étape, on réalise la pièce de jonction en écrasant et/ou laminant au moins un morceau dudit second métal ou alliage en une galette (16) sensiblement plate et mince dudit second métal ou alliage.

18. Procédé selon la revendication 17, caractérisé en ce que, dans la seconde étape, on dispose la galette (16) dans une fenêtre (15) ménagée dans une couche (14) de fibres de renfort disposée sur l'une des portions superposées (8) des deux organes allongés (7) avant superposition par l'autre desdites portions superposées.

19. Procédé selon l'une des revendications 14 à 18, caractérisé par le fait que, dans la deuxième étape, on maintient au moins une pièce de jonction (1, 16) entre des portions superposées (8) des organes allongés (7) au moyen d'une substance adhésive ou collante (9, 17).

20. Procédé selon l'une quelconque des revendications 14 à 19, caractérisé par le fait que, dans la troisième étape, le traitement thermique est effectué sous une dépression comprise entre environ 0,05 MPa et environ 0,01 MPa dans un sac à vide en autoclave, d'abord à une température comprise entre environ 60°C et environ 120°C et pendant une durée comprise entre environ 0,5 h et environ 1,5 h, puis à une température comprise entre environ 140°C et environ 220°C et pendant une durée comprise entre environ 1h et environ 3 h et sous une pression comprise entre environ 0,15 MPa et 0,55 MPa.

## Patentansprüche

1. Verbundmaterialelement (13) mit einer organischen Matrix, die eine kritische Versteifungs- und/oder Aufbereitungstemperatur hat und die mit mineralischen oder organischen Fasern (11, 12) verstärkt ist, die insbesondere aus der Carbon-, Glas- und Aramidfasern enthaltenden Gruppe gewählt sind, sowie mit wenigstens einer Zusammenfügung (10, 10') mit teilweiser Schichtung wenigstens zweier langgestreckter Organe (7) aus einem ersten elektrisch leitendem Metall oder Legierungsmaterial mit einem Schmelzpunkt im wesentlichen oberhalb der erwähnten kritischen Temperatur der Matrix, wobei die Zusammenfügung (10, 10') im wesentlichen in die Matrix eingelassen ist, um durch das Element hindurch eine elektrische Kontinuität zu gewährleisten, **dadurch gekennzeichnet,** daß wenigstens ein Verbindungsstück (1, 16), das zumindest teilweise an der Oberfläche aus einem zweiten elektrisch leitendem Metal oder Legierungsmaterial mit einem im wesentlichen unterhalb des Schmelzpunktes des ersten Metalls oder Legierungsmaterial liegenden Schmelzpunkt besteht, zwischen übereinander geschichteten Bereichen der langgestreckten Organe (7) jeder Zusammenfügung (10, 10') eingefugt ist, wobei das Verbindungsstück (1, 16) mit diesen Bereichen durch Verlötung des zweiten Metalls oder Legierungsmaterials mit dem ersten Metall oder Legierungsmaterial dauerhaft in Kontakt gehalten ist.

2. Element nach Anspruch 1, **dadurch gekennzeichnet,** daß der Schmelzpunkt des zweiten Metalls oder Legierungsmaterials im wesentlichen unterhalb der kritischen Temperatur der Matrix liegt.

3. Element nach einem der Ansprüche 1 und 2, **dadurch gekennzeichnet,** daß das erste Metall oder Legierungsmaterial aus der Gruppe ausgewählt ist, die Kupfer, Aluminium, nichtoxidierenden Stahl und Nickel enthält.

4. Element nach einem der Ansprüche 1 bis 3, **dadurch gekennzeichnet,** daß das zweite Metall oder Legierungsmaterial aus der Gruppe ausgewählt ist, die Indium, Nickel, Zinn, Blei, Zink und eutektische Legierungen enthält.

5. Element nach einem der Ansprüche 1 bis 4, **dadurch gekennzeichnet,** daß das Verbindungsstück (1) ein im wesentlichen ebenes Stück aus einem dritten elektrisch leitendem Metall oder Legierungsmaterial mit einem im wesentlichen oberhalb der erwähnten kritischen Temperatur der Matrix liegenden Schmelzpunkt aufweist und eine Verkleidung (6) zumindest zum Teil aus dem zweiten Metall oder Legierungsmaterial enthält, dessen Schmelzpunkt im wesentlichen unterhalb des Schmelzpunktes des dritten Metalls oder Legierungsmaterials liegt.

6. Element nach Anspruch 5, **dadurch gekennzeichnet,** daß das im wesentlichen ebene Stück des dritten Metalls oder Legierungsmaterials ein Gitter, ein Gitterwerk (1) oder ein Fachwerk ist, das wenigstens teilweise vom zweiten Metall oder Legierungsmaterial (6) verkleidet ist.

7. Element nach Anspruch 6, **dadurch gekennzeichnet,** daß die Verkleidung (6) aus dem zweiten Metall oder Legierungsmaterial eine Dicke hat, die zwischen 0,05 mm und 2 mm liegt.

8. Element nach einem der Ansprüche 5 bis 7, **dadurch gekennzeichnet,** daß das dritte Metall oder Legierungsmaterial aus der Gruppe gewählt ist, die Kupfer-, Aluminium- und Nickellegierungen enthält.

9. Element nach Anspruch 8, **dadurch gekennzeichnet,** daß die langgestreckten Organe (7) Kupferfolien sind und das Verbindungsstück (1) ein mit Indium durchsetztes Gitterwerk (6) aus Bronze ist.

10. Element nach einem der Ansprüche 1 bis 4, **dadurch gekennzeichnet,** daß das Verbindungsstück (16) einzig und allein aus dem zweiten Metall oder Legierungsmaterial besteht.

11. Element nach Anspruch 10, **dadurch gekennzeichnet,** daß das Verbindungsstück eine im wesentlichen flache und dünne Scheibe (16) des zweiten Metalls oder Legierungsmaterials ist, wobei die Scheibe (16) in einem Fenster (15) angeordnet ist, das in einer Lage (14) aus Verstärkungsfasern vorgesehen ist, die auch zwischen den übereinander geschichteten Bereichen (8) der langgestreckten Organe (7) eingefügt ist, an welche die Scheibe (16) angelötet ist.

12. Element nach einem der Ansprüche 1 bis 11, **dadurch gekennzeichnet,** daß die langgestreckten Organe (7) des ersten Metalls oder Legierungsmaterials Bahnen, Bänder oder Streifen sind.

13. Verwendung des Verbundmaterialelements (13) nach einem der vorhergehenden Ansprüche 1 bis 12 im Luftfahrtbereich und insbesondere zur Herstellung von Blättern oder Naben von Hubschrauberrotoren oder zur Herstellung von Rumpf- oder Haubenfeldern, von Klappen oder Türen von Flugzeugen oder Hubschraubern.

14. Verfahren zur Herstellung eines Elements nach einem der Ansprüche 1 bis 12, **dadurch gekennzeichnet,** daß:
- in einem ersten Schritt wenigstens ein Verbindungsstück (1, 16) verwirklicht wird, indem es zumindest zum Teil an der Oberfläche mit dem zweiten elektrisch leitendem Metall oder Legierungsmaterial versehen wird,
- in einem zweiten Schritt wenigstens eine Zusammenfügung (10, 10') vorbereitet wird, indem wenigstens ein gemäß dem ersten Schritt erhaltenes Verbindungsstück (1, 16) zwischen übereinander geschichtete Bereiche (8) wenigstens zweier langgestreckter Organe (7) eingefügt wird, die aus dem ersten elektrisch leitendem Metall oder Legierungsmaterial ausgeführt sind,
- in einem dritten Schritt das Element (13) verwirklicht wird, indem wenigstens eine entsprechend dem zweiten Schritt vorbereitete Zusammenfügung (10, 10') in ein Verbundmaterial eingeführt wird und indem eine die kritische Temperatur der Matrix dieses Materials erreichende thermische Behandlung durchgeführt wird.

15. Verfahren nach Anspruch 14, **dadurch gekennzeichnet,** daß beim ersten Schritt das Verbindungsstück realisiert wird, indem eine Verkleidung (6) des zweiten Metalls oder Legierungsmaterials auf einem im wesentlichen ebenen, aus dem dritten elektrisch leitendem Metall oder Legierungsmaterial ausgeführten Stück (1) abgelagert wird.

16. Verfahren nach Anspruch 15, **dadurch gekennzeichnet,** daß beim ersten Schritt die Ablagerung der Verkleidung (6) am Schwall (6a) beispielsweise mittels eines Lötkolbens (5) ausgeführt wird.

17. Verfahren nach Anspruch 14, **dadurch gekennzeichnet,** daß beim ersten Schritt das Verbindungsstück realisiert wird, indem wenigstens ein Stück des zweiten Metalls oder Legierungsmaterials in eine im wesentlichen flache und dünne Scheibe (16) des zweiten Metalls oder Legierungsmaterials flachgedrückt und/oder gewalzt wird.

18. Verfahren nach Anspruch 17, **dadurch gekennzeichnet, daß** im zweiten Schritt die Scheibe (16) in einem Fenster (15) angeordnet wird, das in einer Lage (14) von Verstärkungsfasern vorgesehen ist, die auf einem der übereinander geschichteten Bereiche (8) der beiden langgestreckten Organe (7) vor Aufschichtung des anderen der übereinander geschichteten Bereiche angeordnet wird.

19. Verfahren nach einem der Ansprüche 14 bis 18, **dadurch gekennzeichnet,** daß beim zweiten Schritt wenigstens ein Verbindungsstück (1, 16) zwischen Übereinander geschichteten Bereichen (8) der langgestreckten Organe (7) mittels einer Haft- oder Klebesubstanz (9, 17) gehalten wird.

20. Verfahren nach einem der Ansprüche 14 bis 19, **dadurch gekennzeichnet,** daß beim dritten Schritt die thermische Behandlung unter einem Unterdruck zwischen etwa 0,05 MPa und etwa 0,01 MPa in einer Autoklaven-Vakuumkammer zuerst bei einer Temperatur zwischen etwa 60°C und etwa 120°C und während einer Dauer zwischen etwa 0,5 h und etwa 1,5 h und dann bei einer Temperatur zwischen etwa 140°C und etwa 220°C und während einer Dauer zwischen etwa 1 h und etwa 3 h und unter einem Druck zwischen etwa 0,15 MPa und 0,55 MPa ausgeführt wird.

## Claims

1. Element (13) made of composite material, comprising an organic matrix which has a critical rigidifying and/or shaping temperature and is reinforced with mineral or organic fibres (11, 12) chosen, in particular, from the group comprising carbon, glass and aramid fibres, as well as at least one assembly (10, 10') with partial superposition of at least two elongate members (7) of a first electrically conductive metal or alloy having a melting point substantially greater than the said critical temperature of the matrix, the assembly (10, 10') being essentially embedded in the matrix so as to ensure electrical continuity through the element, characterized by the fact that at least one junction piece (1, 16), consisting at least partly, on the surface, of a second electrically conductive metal or alloy having a melting point substantially less than the melting point of said first metal or alloy, is interposed between superimposed portions of said elongate members (7) of each assembly (10, 10'), with which portions the said junction piece (1, 16) is held in permanent contact by soldering said second metal or alloy to said first metal or alloy.

2. Element according to Claim 1, characterized in that the melting point of the second metal or alloy is substantially less than the critical temperature of the matrix.

3. Element according to anyone of Claims 1 and 2, characterized in that the first metal or alloy is chosen from the group comprising copper, aluminium, stainless steel and nickel.

4. Element according to one of Claims 1 to 3, characterized in that the second metal or alloy is chosen from the group comprising indium, nickel, tin, lead, zinc and eutectic alloys.

5. Element according to any one of Claims 1 to 4, characterized in that the junction piece (1) comprises a substantially plane piece, made of a third electrically conductive metal or alloy, having a melting point substantially greater than said critical temperature of the matrix, and including an at least partial coating (6) made of said second metal or alloy whose melting point is substantially less than the melting point of the said third metal or alloy.

6. Element according to Claim 5, characterized by the fact that the substantially plane piece of the third metal or alloy is a grid, a mesh (1) or a trellis, at least partly coated with the second metal or alloy (6).

7. Element according to Claim 6, characterized by the fact that the coating (6) made of the second metal or alloy has a thickness of between 0.05 and 2 mm.

8. Element according to any one of Claims 5 to 7, characterized in that said third metal or alloy is chosen from the group comprising the alloys of copper, of aluminium and of nickel.

9. Element according to Claim 8, characterized by the fact that the elongate members (7) are copper shims and the junction piece (1) is a mesh made of bronze impregnated with indium (6).

10. Element according to any one of Claims 1 to 4, characterized in that the junction piece (16) consists solely of said second metal or alloy.

11. Element according to Claim 10, characterized in that said junction piece is a substantially flat and thin wafer (16) of said second metal or alloy, the wafer (16) being arranged in a window (15) made in a layer (14) of reinforcing fibres, which layer is also interposed between said superimposed portions (8) of the elongate members (7) to which the wafer (16) is soldered.

12. Element according to any one of Claims 1 to 11, characterized by the fact that the elongate members (7) of the first metal or alloy are foils, tapes or strips.

13. Use of the element (13) made of composite material according to any one of the preceding Claims 1 to 12 in the field of aeronautics, and in particular for the manufacture of helicopter rotor blades or hubs or for the manufacture of fuselage or cowling panels, hatches or doors of aeroplanes and of helicopters.

14. Process for manufacturing an element according to any one of Claims 1 to 12, characterized by the fact that:
- in a first step, at least one junction piece (1, 16) is produced by making it at least partly, on the surface, from said second electrically conductive metal or alloy ;
- in a second step, at least one assembly (10, 10') is prepared by interposing at least one junction piece (1, 16) obtained according to the first step between superimposed portions (8) of at least two elongate members (7) produced in the first electrically conductive metal or alloy ; and
- in a third step, the element (13) is produced by inserting at least one assembly (10, 10') prepared according to the second step into a composite material and by carrying out a heat treatment reaching the critical temperature of the matrix of said material.

15. Process according to Claim 14, characterized in that, in the first step, the junction piece is produced by depositing a coating (6) of said second metal or alloy on a substantially plane piece (1) produced in the third electrically conductive metal or alloy.

16. Process according to Claim 15, characterized by the fact that, in the first step, the coating (6) is deposited, using a wave (6a) technique, by means of a soldering iron (5) for example.

17. Process according to Claim 14, characterized in that, in the first step, the junction piece is produced by compressing and/or rolling at least one piece of the said second metal or alloy into the form of a substantially flat and thin wafer (16) of said second metal or alloy.

18. Process according to Claim 17, characterized in that, in the second step, the wafer (16) is arranged in a window (15) made in a layer (14) of reinforcing fibres, which layer is arranged on one of the superimposed portions (8) of the two elongate members (7) before superposition by the other of the said superimposed portions.

19. Process according to one of Claims 14 to 18, characterized by the fact that, in the second step, at least one junction piece (1, 16) is held between superimposed portions (8) of the elongate members (7) by means of an adhesive or adhesively bonding substance (9, 17).

20. Process according to any one of Claims 14 to 19, characterized by the fact that, in the third step, the heat treatment is carried out at an underpressure of between approximately 0.05 MPa and approximately 0.01 MPa in a vacuum bag within an autoclave, firstly at a temperature of between approximately 60°C and approximately 120°C, for a duration of between approximately 0.5 h and approximately 1.5 h, and then at a temperature of between approximately 140°C and approximately 220°C, for a duration of between approximately 1 h and approximately 3 h and at a pressure of between approximately 0.15 MPa and 0.55 MPa.
